# EUROPEAN PATENT APPLICATION

(11) **EP 1 950 251 A1**
(43) Date of publication of application: **30.07.2008**
(21) Application number: 06822453.4
(22) Date of filing: 27.10.2006
(51) Int. Cl.: C08L 101/00, B32B 27/00, C08J 5/18, C08L 15/00, C08L 45/00, C08L 65/00

(54) **OXYGEN-ABSORBING RESIN COMPOSITIONS, OXYGEN-ABSORBING FILM, AND OXYGEN-ABSORBING MULTILAYER STRUCTURE**

(30) Priority: 28.10.2005 JP 2005313919; 28.10.2005 JP 2005313928
(71) Applicant: Zeon Corporation, Chiyoda-ku Tokyo 100-8246 (JP)
(72) Inventor: KITAHARA, Shizuo, Tokyo 100-8246 (JP); TERAISHI, Kazuo, Tokyo 100-8246 (JP)
(74) Representative: Albrecht, Thomas
(86) International application number: PCT/JP2006/321492
(87) International publication number: WO 2007/049739

(57) **Abstract**

[PROBLEMS] To provide an oxygen absorbing resin composition which is excellent in oxygen absorption at room temperature, reduced in metal content, and reduced in odor emission after oxygen absorption; an oxygen-absorbing film comprising one of the oxygen-absorbing resin compositions; and an oxygen-absorbing multilayer structure including an oxygen-absorbing layer comprising one of the oxygen-absorbing resin compositions.

[MEANS FOR SOLVING PROBLEMS] One of the oxygen-absorbing resin compositions comprises a resin (A1) having a C-H bond in which the bond dissociation energy is at most 3.70 eV and a resin (B1) having a C-H bond in which the bond dissociation energy is larger than 3.70 eV but at most 4.20 eV. The other composition comprises a resin (A2) having a C-H bond capable of yielding a carbon radical in which the energy of reaction with oxygen is at most 10.0 kcal/mol and a resin (B2) having a C-H bond capable of yielding a carbon radical in which the energy of reaction with oxygen is larger than 10.0 kcal/mol but at most 22.0 kcal/mol.

## Description

### TECHNICAL FIELD

The present invention relates to an oxygen-absorbing resin composition that exhibits excellent oxygen absorbability, to an oxygen-absorbing film comprising the oxygen-absorbing resin composition and to an oxygen-absorbing multilayer structure that includes an oxygen-absorbing layer comprising the oxygen-absorbing resin composition. More precisely, the invention relates to an oxygen-absorbing resin composition that is excellent in the oxygen absorption level and the oxygen absorption rate at room temperature and gives few smells after oxygen absorption, to an oxygen-absorbing film comprising the oxygen-absorbing resin composition and to an oxygen-absorbing multilayer structure that includes an oxygen-absorbing layer comprising the oxygen-absorbing resin composition.

### BACKGROUND ART

The quality of foods, drinks, drugs and the like is deteriorated by oxygen, and therefore they are desired to be stored in the absence of oxygen or under the condition with an extremely small amount of oxygen.
Accordingly, containers or packs for storing foods, drinks, drugs and the like may be filled with nitrogen; however, for example, they have some problems in that the production costs increase and that, when once opened, air flows into them from the outside and thereafter they could no more prevent quality deterioration. Therefore, various studies have been made for absorbing oxygen that remains in containers or packs to thereby remove oxygen from the system.

Heretofore, for removing oxygen from containers or packs, widely employed is a method of putting therein a separate small bag that contains an oxygen absorbent comprising iron powder as the main ingredient thereof. The method is inexpensive and gives a high oxygen absorption rate, but in case of using a metal detector for detecting impurities or in case of applying packs to a microwave oven directly as they are, the method may have some disadvantages.

Accordingly, regarding resinous containers or packing materials, studies have been made for making those containers or packing materials have oxygen absorbability by themselves.
For example, use of an oxygen absorbent is proposed, which comprises a polyterpene such as poly(α-pinene), poly (β-pinene) or poly (dipentene), and a transition metal salt such as cobalt neodecanoate or cobalt oleate serving as an oxygen-absorbing catalyst (Patent Reference 1).
Also proposed is use of an oxygen absorbent comprising a conjugated diene polymer such as polyisoprene or 1,2-polybutadiene, and a transition metal salt (Patent Reference 2).
Further proposed is use of an oxygen absorbent comprising a copolymer of ethylene and cyclopentene, and a transition metal salt (Patent Reference 3).

However, the compositions disclosed in these patent references have some problems in that their oxygen absorbability is insufficient and they leave a peculiar smell that may be caused by side products in oxygen trapping reactions in packed containers. Since they comprise a transition metal, the polymer may be deteriorated with the advance of the oxygen absorption reaction whereby the mechanical strength of the packing materials may be extremely lowered or the materials may be colored, and further, the transition metal salt may dissolve out; and therefore, the compositions may be difficult to use in some applications.

Patent Reference 1: JP-T 2001-507045 (WO98/06779)
Patent Reference 2: JP-A 2003-71992
Patent Reference 3: JP-T 2003-504042 (WO01/013521)

### DISCLOSURE OF THE INVENTION

### PROBLEMS THAT THE INVENTION IS TO SOLVE

Accordingly, an object of the invention is to provide an oxygen-absorbing resin composition which is excellent in the oxygen absorption level and the oxygen absorption rate at room temperature, which does not require metal and which smells little when having absorbed oxygen, an oxygen-absorbing film comprising the oxygen-absorbing composition, and an oxygen-absorbing multilayer structure including an oxygen-absorbing layer that comprises the oxygen-absorbing resin composition.

The present inventors have assiduously studied for the purpose of solving the above-mentioned problems and have found that an oxygen absorbent comprising a cyclized product of a conjugated diene polymer as the active ingredient thereof exhibits high oxygen absorbability even though a transition metal salt is not added thereto as a catalyst, and that, even after having absorbed oxygen, it still keeps high mechanical strength, and have proposed the oxygen absorbent that comprises a cyclized product of a conjugated diene polymer as the active ingredient thereof (JP-A 2005-186060).
The inventors have further studied the oxygen absorbent and have found that combination of the cyclized product of a conjugated diene polymer constituting the oxygen absorbent with a resin having a specific structure further enhances the oxygen absorbability (oxygen absorption level and oxygen absorption rate), further reduces smell emission after oxygen absorption, and enhances the mechanical strength of the resin composition; and based on these findings, the inventors have hit on a combination of two types of resins each containing a carbon-hydrogen bond having a specific dissociation energy level, and a combination of two types of resins each capable of generating a radical of which the reaction energy with oxygen falls within a specific range, and have further studied to complete the present invention.

### MEANS FOR SOLVING THE PROBLEMS

According to the invention, there is provided a first oxygen-absorbing resin composition that comprises a resin (A1) having a C-H bond of which the bond dissociation energy is at most 3.70 eV, and a resin (B1) having a C-H bond of which the bond dissociation energy is larger than 3.70 eV but at most 4.20 eV.
In the first oxygen-absorbing resin composition of the invention, the ratio of the resin (A1) having a C-H bond of which the bond dissociation energy is at most 3.70 eV, to the resin (B1) having a C-H bond of which the bond dissociation energy is larger than 3.70 eV but at most 4.20 eV is preferably from 3/97 to 50/50 by weight.
In the first oxygen-absorbing resin composition of the invention, the number of the C-H bond of which the bond dissociation energy is at most 3.70 eV, in the resin (A1) having a C-H bond of which the bond dissociation energy is at most 3.70 eV is preferably at least one, per one repetitive unit that constitutes the resin (A1).
In the first oxygen-absorbing resin composition of the invention, the resin (A1) having a C-H bond of which the bond dissociation energy is at most 3. 70 eV is preferably a cyclized product of a conjugated diene polymer.
In the first oxygen-absorbing resin composition of the invention, the resin (B1) having a C-H bond of which the bond dissociation energy is larger than 3.70 eV but at most 4.20 eV is preferably a cyclic olefin resin.
In the first oxygen-absorbing resin composition of the invention, the cyclic olefin resin is preferably an ethylene/cyclic olefin copolymer.

According to the invention, there is provided a second oxygen-absorbing resin composition that comprises a resin (A2) having a C-H bond capable of forming a carbon radical of which the reaction energy with oxygen is at most 10.0 kcal/mol, and a resin (B2) having a C-H bond capable of forming a carbon radical of which the reaction energy with oxygen is larger than 10.0 kcal/mol but at most 22.0 kcal/mol.
In the second oxygen-absorbing resin composition of the invention, the ratio of the resin (A2) having a C-H bond capable of forming a carbon radical of which the reaction energy with oxygen is at most 10.0 kcal/mol, to the resin (B2) having a C-H bond capable of forming a carbon radical of which the reaction energy with oxygen is larger than 10.0 kcal/mol but at most 22.0 kcal/mol is preferably from 3/97 to 50/50 by weight.
In the second oxygen-absorbing resin composition of the invention, the number of the C-H bond capable of forming a carbon radical of which the reaction energy with oxygen is at most 10.0 kcal/mol, in the resin (A2) having a C-H bond capable of forming a carbon radical of which the reaction energy with oxygen is at most 10.0 kcal/mol is preferably at least one, per one repetitive unit that constitutes the resin (A2).
In the second oxygen-absorbing resin composition of the invention, the resin (A2) having a C-H bond capable of forming a carbon radical of which the reaction energy with oxygen is at most 10.0 kcal/mol is preferably a cyclized product of a conjugated diene polymer.
In the second oxygen-absorbing resin composition of the invention, the resin (B2) having a C-H bond capable of forming a carbon radical of which the reaction energy with oxygen is larger than 10.0 kcal/mol but at most 22.0 kcal/mol is preferably a polystyrene or a cyclic olefin resin.

The cyclized product of a conjugated diene polymer for use in the oxygen-absorbing resin composition of the invention ("the oxygen-absorbing resin composition of the invention" as referred to hereinafter is meant to include both "the first oxygen-absorbing resin composition of the invention" and "the second oxygen-absorbing resin composition of the invention") preferably has an unsaturated bond reduction ratio of at most 60 %.
The cyclized product of a conjugated diene polymer for use in the oxygen-absorbing resin composition of the invention is preferably a cyclized product of a polyisoprene rubber or a cyclized product of a styrene/isoprene block copolymer.
According to the invention, there is provided an oxygen-absorbing film comprising the above-mentioned, oxygen-absorbing resin composition.
According to the invention, there is provided an oxygen-absorbing multilayer structure including an oxygen-absorbing layer comprising the above-mentioned, oxygen-absorbing resin composition.
Preferably, the oxygen-absorbing multilayer structure further comprises at least a gas-barrier material layer.

### ADVANTAGES OF THE INVENTION

The oxygen-absorbing resin composition of the invention does not require a metal compound to be a catalyst for oxygen absorption reactions unlike conventional oxygen absorbents. The oxygen-absorbing resin composition of the invention may exhibit, without requiring the catalyst of the type, good oxygen absorbability that its oxygen absorption level per film weight is large and that its oxygen absorption rate per unit time and per film unit area is high.
Further, the oxygen-absorbing resin composition of the invention may reduce smell emission after oxygen absorption without reducing its oxygen absorption level, because of its oxygen absorption mechanism.
As the oxygen-absorbing film and the oxygen-absorbing multilayer structure of the invention obtained by the use of the oxygen-absorbing resin composition have excellent oxygen absorbability at room temperature and do not cause a problem of remaining smell emission, they are favorable as a packing material for various foods, chemicals, drugs, cosmetics, etc.

### BEST MODES FOR CARRYING OUT THE INVENTION

The first oxygen-absorbing resin composition of the invention comprises a resin (A1) having a C-H bond of which the bond dissociation energy is at most 3.70 eV, and a resin (B1) having a C-H bond of which the bond dissociation energy is larger than 3.70 eV but at most 4.20 eV.
In the invention, "resin having a C-H bond of which the bond dissociation energy is at most 3.70 eV" means that "the lowermost bond dissociation energy is at most 3.70 eV among the bond dissociation energy of all the C-H bonds that the resin has"

The bond dissociation energy of a C-H bond in a resin may be determined according to the following expression, on the assumption that the resin comprises repetitive units containing that C-H bond, for a model of the repetitive unit with a methyl group bonding to both its ends:
Bond dissociation energy = E (R·) +E (H.) -E (R-H)
wherein E (R·), E(H·) and E (R-H) each mean the electron energy of the radical after the bond dissociation, the electron energy of the hydrogen radical, and the electron energy of the R-H bond before the bond dissociation, respectively.
For the computation, used is a density functional method (see the following [1] and [2]) program, Accelrys' MS Modeling v3.2, DMol3 module, in which HCTH (see the following [3]) is used for the functional and DND (see the following [4]) is used for the basis function.
[1] Hohenberg, P.; Kohn, W., Phys. Rev. B, 136, 864-871 (1964).
[2] Kohn, W.; Sham. L. J., Phys. Rev. A, 140, 1133-1138 (1965).
[3] Boese, A. D., Handy, N.C., J. Chem. Phys., 114, 5497 (2001).
[4] Delley, B. J., Chem. Phys., 92, 508 (1990).

Obtained according to the method, the bond dissociation energy of the C-H bond (allyl carbon-hydrogen) in the ring, as shown by the thick letters, in the formula (1) of a cyclized product of a conjugated diene polymer is 3.70 eV.
Obtained according to the method, the dissociation energy of the C-H bond, as shown by the thick letters, in a hydrogenated product of a 1,4-polyisoprene polymer and that in an ethylene/norbornene copolymer are as shown in the formula (2) and the formula (3), respectively.

[Formula 1]

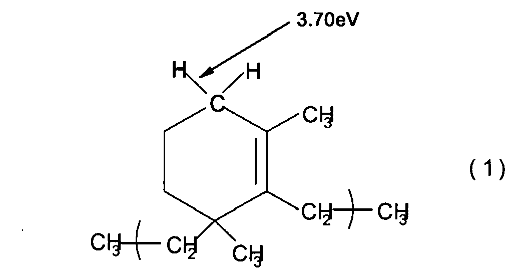

[Formula 2]

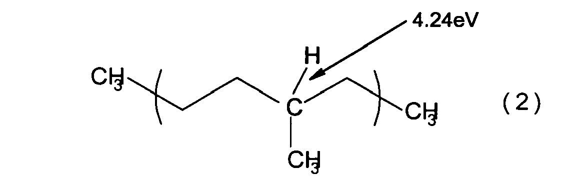

[Formula 3]

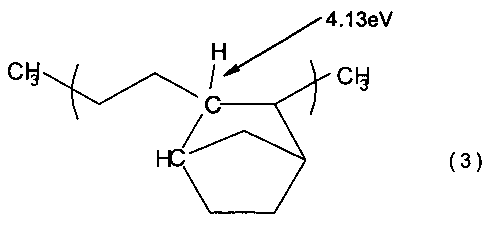

In the resin (A1), the number of the C-H bond of which the bond dissociation energy is at most 3.70 eV is not specifically defined, but is preferably at least one per one repetitive unit that constitutes the resin (A1).

The resin (A1) is not particularly limited so far as it has a C-H bond of which the bond dissociation energy is at most 3.70 eV, but is preferably a cyclized product of a conjugated diene polymer.

The second oxygen-absorbing resin composition of the invention comprises a resin (A2) having a C-H bond capable of forming a carbon radical of which the reaction energy with oxygen is at most 10.0 kcal/mol, and a resin (B2) having a C-H bond capable of forming a carbon radical of which the reaction energy with oxygen is larger than 10.0 kcal/mol but at most 22.0 kcal/mol.
In the invention, "resin having a C-H bond capable of forming a carbon radical of which the reaction energy with oxygen is at most 10. 0 kcal/mol (more than 10. 0 kcal/mol) " means that "of the reaction energy with oxygen of all the carbon radicals capable of forming a C-H bond that the resin has, the lowermost one is at most 10.0 kcal/mol (more than 10.0 kcal/mol)".

The reaction energy with oxygen of the carbon radical capable of being formed by a C-H bond in a resin may be determined according to the following expression, on the assumption that the resin comprises repetitive units containing that C-H bond, for a model of the repetitive unit with a methyl group bonding to both its ends:
Reaction energy with oxygen of a carbon radical = E(R-O-O·)-{E(R·)+E(O₂)}
wherein E (R-O-O·), E (R·) and E (O₂) each mean the electron energy of the radical after the reaction with oxygen, the electron energy of the radical before the reaction with oxygen, and the electron energy of an oxygen molecule, respectively.
For the computation, used is the above-mentioned density functional method program, Accelrys' MS Modeling v3.2, DMol3 module, in which HCTH is used for the functional and DND is used for the basis function (see the above [1] to [4]).

Obtained according to the method, the reaction energy with oxygen of the radical on the allyl carbon atom in the ring, as shown by the thick letters, in the formula (4) of a cyclized product of a conjugated diene polymer is 10.0 kcal/mol.
Obtained according to the method, the reaction energy with oxygen of the carbon atom, as shown by the thick letters, in a hydrogenated product of 1,4-polyisoprene polymer, that in polystyrene and that in an ethylene/norbornene copolymer are 23.3 kcal/mol, 13.9 kcal/mol and 19.7 kcal/mol, as shown in the formulae (5), (6) and (7), respectively.
The radical (R-O-O·) having oxygen added to the carbon radical (R.) is more unstable than the radial (R-O.), and therefore the above means that those having a smaller value of reaction energy with oxygen have a smaller degree of instability.

[Formula 4]

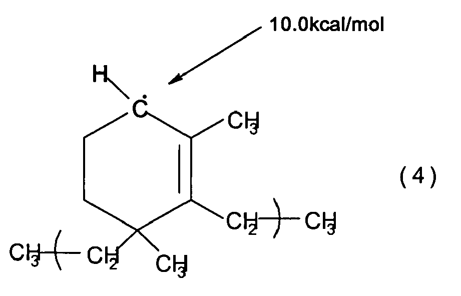

[Formula 5]

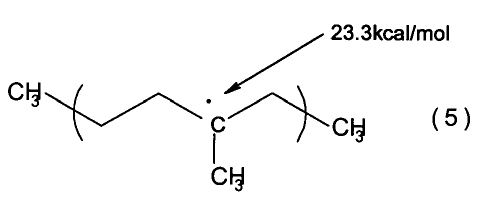

[Formula 6]

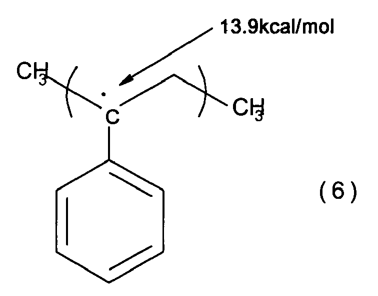

[Formula 7]

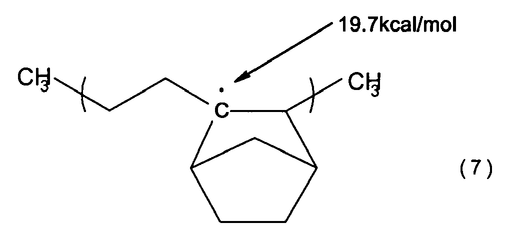

In the resin (A2), the number of the C-H bond capable of forming a carbon radical of which the reaction energy with oxygen is at most 10.0 kcal/mol is not specifically defined, but is preferably at least one per one repetitive unit that constitutes the resin (A2).

The resin (A2) is not particularly limited so far as it has a C-H bond capable of forming a carbon radical of which the reaction energy with oxygen is at most 10.0 kcal/mol, but is preferably a cyclized product of a conjugated diene polymer.

In the invention, the cyclized product of a conjugated diene polymer that is favorably used for the resin (A1) having a C-H bond of which the bond dissociation energy is at most 3.70 eV or the resin (A2) having a C-H bond capable of forming a carbon radical of which the reaction energy with oxygen is at most 10.0 kcal/mol is one obtained through cyclization of a conjugated diene polymer in the presence of an acid catalyst.
The conjugated diene polymer for use herein includes a homopolymer and a copolymer of conjugated diene monomer(s), and a copolymer of a conjugated diene monomer and a monomer copolymerizable with it.

The conjugated diene monomer is not particularly limited, and examples of the conjugated diene monomer include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-oc tadiene, etc.
One or more of these monomers may be used either singly or as combined.

The other monomer copolymerizable with the conjugated diene monomer includes, for example, aromatic vinyl monomers such as styrene, o-methylstyrene, p-methylstyrene, m-methylstyrene, 2,4-dimethylstyrene, ethylstyrene, p-t-butylstyrene, α-methylstyrene, α-methyl-p-methylstyrene, o-chlorostyrene, m-chlorostyrene, p-chlorostyrene, p-bromostyrene, 2,4-dibromostyrene and vinylnaphthalene; linear olefin monomers such as ethylene, propylene and 1-butene; cyclic olefin monomers such as cyclopentene and 2-norbornene; non-conjugated diene monomers such as 1,5-hexadiene, 1,6-heptadiene, 1,7-octadiene, dicyclopentadiene and 5-ethylidene-2-norbornene; (meth)acrylates such as methyl (meth)acrylate and ethyl (meth)acrylates; other (meth)acrylic acid derivatives such as (meth)acrylonitrile, (meth)acrylamide; etc.
One or more of these monomers may be used either singly or as combined.

Specific examples of the conjugated diene polymer include homo- or copolymers of conjugated diene(s) such as natural rubber (NR), polyisoprene rubber (IR), polybutadiene rubber (BR) and butadiene/isoprene copolymer rubber (BIR); and copolymers of a conjugated diene and a monomer copolymerizable with it, for example, styrene/butadiene rubber (SBR), isoprene/isobutylene copolymer rubber (IIR), ethylene/propylene/diene copolymer rubber (EPDM) and aromatic vinyl/conjugated diene block copolymers such as styrene/isoprene block copolymer; etc. Above all, preferred are polyisoprene rubber, polybutadiene rubber and a styrene/isoprene block copolymer; and more preferred are polyisoprene rubber and a styrene/isoprene block copolymer.

In the copolymer of a conjugated diene and a monomer copolymerizable with it, the content of the conjugated diene monomer unit may be suitably selected within a range not detracting from the advantages of the invention, but in general, it may be at least 10 mol%, preferably at least 50 mol%, more preferably at least 70 mol%. Above all, those substantially comprising only a conjugated diene monomer unit are preferred. When the content of the conjugated diene monomer unit is too small, then the unsaturated bond reduction ratio falling within a suitable range may be difficult to obtain.

In case where the cyclized product of a conjugated diene polymer is a cyclized product of an aromatic vinyl/conjugated diene block copolymer, the aromatic vinyl monomer unit content in the cyclized product is not specifically defined, but is generally from 1 to 90 % by weight, preferably from 5 to 50 % by weight, more preferably from 10 to 30 % by weight. When the content is too small, then the initial mechanical strength of the oxygen-absorbing resin composition may be low, and the reduction in the mechanical strength thereof after oxygen absorption may be large. On the contrary, when the aromatic vinyl monomer unit content is too large, then the proportion of the block of the cyclized product of a conjugated diene polymer may be relatively low whereby the oxygen absorption level of the composition may lower and the oxygen absorption rate thereof may lower.

The conjugated diene polymer may be prepared in an ordinary polymerization method, and for example, it may be prepared through solution polymerization or emulsion polymerization using a suitable catalyst such as a Ziegler polymerization catalyst containing titanium or the like as the catalyst component, or an alkyllithium polymerization catalyst or a radical polymerization catalyst.

The cyclized product of the conjugated diene polymer to be used in the invention may be prepared through cyclization of the above-mentioned conjugated diene polymer in the presence of an acid catalyst.
The acid catalyst for use in cyclization may be any known one. Its specific examples include sulfuric acid; organic sulfonic acid compounds such as fluoromethanesulfonic acid, difluoromethanesulfonic acid, p-toluenesulfonic acid, xylenesulfonic acid, alkylbenzenesulfonic acids having an alkyl group with from 2 to 18 carbon atoms, and their anhydrides and alkyl esters; Lewis acids such as boron trifluoride, boron trichloride, tin tetrachloride, titanium tetrachloride, aluminum chloride, diethylaluminum monochloride, ethylammonium dichloride, aluminum bromide, antimony pentachloride, tungsten hexachloride and iron chloride; etc. One or more of these acid catalysts may be used either singly or as combined. Above all, preferred are organic sulfonic acid compounds; and more preferred are p-toluenesulfonic acid and xylenesulfonic acid.
The amount of the acid catalyst to be used may be generally from 0.05 to 10 parts by weight per 100 parts by weight of the conjugated diene polymer, preferably from 0.1 to 5 parts by weight, more preferably from 0.3 to 2 parts by weight.

In general, the conjugated diene polymer is dissolved in a hydrocarbon solvent for its cyclization.
The hydrocarbon solvent is not particularly limited so far as it does not interfere with the cyclization, and includes, for example, aromatic hydrocarbons such as benzene, toluene, xylene and ethylbenzene; aliphatic hydrocarbons such as n-pentane, n-hexane, n-heptane and n-octane; alicyclic hydrocarbons such as cyclopentane and cyclohexane; etc. Preferably, the boiling point of those hydrocarbon solvents is not lower than 70°C.
The solvent for the polymerization to give the conjugated diene polymer and the solvent for the cyclization may be the same type. In this case, an acid catalyst for cyclization may be added to the polymerization reaction liquid after polymerization, whereby the cyclization may be attained after the polymerization.
The amount of the hydrocarbon solvent to be used may be such that the solid concentration of the conjugated diene polymer therein could be generally from 5 to 60 % by weight, preferably from 20 to 40 % by weight.

The cyclization may be attained under pressure or under reduced pressure, or under atmospheric pressure, but from the viewpoint of the simplicity in operations, it is preferably attained under atmospheric pressure. The cyclization in a dry stream, especially in an atmosphere of dry nitrogen or dry argon may prevent side reactions to be caused by moisture.
The reaction temperature and the reaction time for the cyclization are not specifically defined. The reaction temperature may be generally from 50 to 150°C, preferably from 70 to 110°C; and the reaction time may be generally from 0.5 to 10 hours, preferably from 2 to 5 hours.
After the cyclization, the acid catalyst is inactivated in an ordinary manner, then the acid catalyst residue is removed, and thereafter the hydrocarbon solvent is removed, thereby giving a solid cyclized product of the conjugated diene polymer.

In the invention, the cyclized product of a conjugated diene polymer preferably has an unsaturated bond reduction ratio of at most 60 %, more preferably from 55 to 40 %.
Comprising the cyclized product of a conjugated diene polymer having an unsaturated bond reduction ratio of at most 60 %, the oxygen-absorbing resin composition of the invention is excellent in the oxygen absorption level and the oxygen absorption rate.

The unsaturated bond reduction ratio is an index that indicates the degree of unsaturated bond reduction through cyclization in the conjugated diene monomer unit segment in the conjugated diene polymer; and its value is determined in the manner mentioned below. Specifically, in the conjugated diene monomer unit segment in a conjugated diene polymer, the ratio of the peak area of the protons directly bonding to the double bond to the peak area of all protons is determined through proton NMR analysis before and after cyclization, and the reduction ratio is computed from the data.
In the conjugated diene monomer unit segment in a conjugated diene polymer, when the overall proton peak area before cyclization is represented by SBT and the peak area of the protons directly bonding to the double bond before cyclization is by SBU, and the overall proton peak area after cyclization is represented by SAT and the peak area of the protons directly bonding to the double bond after cyclization is by SAU, then the peak area ratio (SB) of the protons directly bonding to the double bond before cyclization is:
SB = SBU/SBT,
and the peak area ratio (SA) of the protons directly bonding to the double bond after cyclization is:
SA = SAU/SAT.
Accordingly, the unsaturated bond reduction ratio is determined according to the following expression:
Unsaturated bond reduction ratio (%) = 100 x (SB-SA)/SB.

The unsaturated bond reduction ratio of the cyclized product of a conjugated diene polymer may be controlled by suitably selecting the amount of the acid catalyst, the reaction temperature, the reaction time and others in cyclization.
For obtaining a cyclized product of a conjugated diene polymer having a desired unsaturated bond reduction ratio, for example, employable is a method of previously preparing the calibration curves of the amount of the acid catalyst, the reaction temperature, the reaction time and others in cyclization, and attaining the cyclization on the basis of these.

The weight-average molecular weight of the cyclized product of a conjugated diene polymer (A) for use in the invention is preferably from 10,000 to 1,000,000, in terms of standard polystyrene measured through gel permeation chromatography, more preferably from 20,000 to 700,000, even more preferably from 30,000 to 500,000.
In the case where the cyclized product of a conjugated diene polymer is a cyclized product of an aromatic vinyl/conjugated diene block copolymer, the weight-average molecular weight of the aromatic vinyl polymer block is preferably from 1,000 to 500,000, more preferably from 3,000 to 300,000, even more preferably from 5, 000 to 100, 000, still more preferably from 8, 000 to 50, 000. When the weight-average molecular weight is too low, then the initial mechanical strength of the oxygen-absorbing resin composition may be low, and the mechanical strength reduction after oxygen absorption may increase. On the contrary, when the weight-average molecular weight is too high, then the proportion of the block of the cyclized product of a conjugated diene polymer may lower relatively, and the oxygen absorption level of the composition may lower.
The weight-average molecular weight of the cyclized product of a conjugated diene polymer may be controlled by suitably selecting the weight-average molecular weight of the conjugated diene polymer to be cyclized.
When the weight-average molecular weight of the cyclized product of a conjugated diene polymer is too low, then the composition may be difficult to form into a film, and its mechanical strength may lower. When the weight-average molecular weight of the cyclized product of a conjugated diene polymer is too high, then the solution viscosity in cyclization may increase and the composition may be difficult to handle, and the processability thereof in extrusion may worsen.

The gel (toluene-insoluble) fraction of the cyclized product of a conjugated diene polymer may be generally at most 10 % by weight, preferably at most 5 % by weight, but more preferably the cyclized product contains substantially no gel. When the gel fraction is too much, then the film formed of the resin composition may lose smoothness.

In the invention, for securing the thermal stability in processing the cyclized product of a conjugated diene polymer, an antioxidant may be added to the cyclized product of a conjugated diene polymer. The amount of the antioxidant is not particularly limited, and may be generally within a range of from 10 to 5, 000 ppm, relative to the weight of the cyclized product of a conjugated diene polymer, preferably from 30 to 3,000 ppm, more preferably from 50 to 2,000 ppm.

The amount of the antioxidant in the oxygen-absorbing resin composition of the invention may be generally within a range of from 10 to 3,000 ppm, preferably from 30 to 2,000 ppm, more preferably from 50 to 1,000 ppm. However, when the amount of the antioxidant added is too much, then it may lower the oxygen absorbability of the composition; and therefore, in consideration of the stability in processing the oxygen-absorbing resin composition, the amount to be added will have to be suitably controlled.

The antioxidant is not particularly limited and may be any one generally used in the field of resin materials or rubber materials. Typical examples of the antioxidant include hindered phenolic antioxidants, phosphorus-containing antioxidants and lactone-based antioxidants. Two or more types of such antioxidants may be used as combined. In particular, preferred is a combination of a phenolic antioxidant and a phosphorus-containing antioxidant. In addition, an amine-based light stabilizer (HALS) may also be added.

Specific examples of the hindered phenolic antioxidants are 2,6-di-t-butyl-p-cresol, pentaerythritol tetrakis[3-(3,5-di-t-butyl-4-hydroxyphenyl)propionate], thiodiethylene-bis[3-(3,5-di-t-butyl-4-hydroxyphenyl)propionate], octadecyl 3-(3,5-di-t-butyl-4-hydroxyphenyl)propionate, N,N'-hexane-1,6-diylbis[3-(3,5-di-t-butyl-4-hydroxyphenyl)propionam ide], diethyl [[3,5-bis(1,1-dimethylethyl)-4-hydroxyphenyl ]methyl]phosphonate, 3,3',3",5,5',5"-hexa-t-butyl-a,a',a"-(mesitylene-2,4,6-triyl)tri-p-cresol, hexamethylenebis[3-(3,5-dit-butyl)-4-hydroxyphenyl] propionate, tetrakis[methylene-3 -(3,5-di-t-butyl-4-hydroxyphenyl)propionate]methane, n-oct adecyl 3-(4'-hydroxy-3,5'-di-t-butylphenyl)propionate, 1,3,5-tris(3,5-di-t-butyl-4-hydroxybenzyl)-1,3,5-triazine-2,4,6(1H,3H,5H)-trione, 2,4-bis(n-octylthio)-6-(4-hydroxy-3,5-di -t-butylanilino)-1,3,5-triazine, tris(3,5-di-t-butyl-4-hyd roxybenzyl) isocyanurate, 2-t-butyl-6-(3'-t-butyl-2'-hydroxy-5'-m ethylbenzyl)-4-methylphenyl acrylate, 2-[1-(2-hydroxy-3,5-di-t-phe nyl)ethyl]-4,6-di-t-pentylphenyl acrylate, etc.

The phosphorus-containing antioxidants include 2,2'-methylenebis(4,6-di-t-butylphenyl)octyl phosphite, tris(2,4-di-t-butylphenyl) phosphite, bis[2,4-bis(1,1-dimethylethyl)-6-methylphenyl]ethyl phosphite, tetrakis(2,4-di-t-butylphenyl)[1,1-biphenyl]-4,4'-diyl bisphosphonite, bis(2,4-di-t-butylphenyl)pentaerythritol phosphite, etc.
The lactone-based antioxidants include reaction products of 5,7-di-t-butyl-3-(3,4-dimethylphenyl)-3H-benzofura n-2-one or the like with o-xylene.

In addition, if desired, various compounds generally added to the cyclized product of a conjugated diene polymer may be added thereto. The compounds include a filler such as calcium carbonate, alumina and titanium oxide; a tackifier (hydrogenated petroleum resins, hydrogenated terpene resins, castor oil derivatives, sorbitan higher fatty acid esters, low-molecular polybutenes); a plasticizer (phthalates, glycol esters) ; a surfactant; a leveling agent; a UV absorbent; a light stabilizer; a dehydrating agent; a pot life extender (acetylacetone, methanol, methyl orthoacetate, etc.); a cissing-improving agent; etc.

In the invention, if desired, a poly-α-olefin resin may be combined with the cyclized product of a conjugated diene polymer. This may enhance the mechanical strength of the oxygen-absorbing resin composition before and after oxygen absorption without exerting any influence on the oxygen absorption rate and the oxygen absorption level of the composition.
The poly-α-olefin resin may be any of a homopolymer of α-olefin, a copolymer of two or more types of α-olefins, or a copolymer of an α-olefin and a monomer except α-olefin, and may also be a modified derivative from these (co)polymers.

Specific examples of the poly-α-olefin resin include a homopolymer or a copolymer of an α-olefin such as ethylene or propylene, for example, an α-olefin homopolymer such as polyethylene, e.g., linear low-density polyethylene (LLDPE), low-density polyethylene (LDPE), middle-density polyethylene (MDPE), high-density polyethylene (HDPE) and metallocene polyethylene, polypropylene, metallocene polypropylene, polymethylpentene and polybutene; a copolymer of ethylene with any other α-olefin, for example, ethylene/propylene random copolymer, ethylene/propylene block copolymer and ethylene/propylene/polybutene-1 copolymer; copolymer of an α-olefin as a main component with an unsaturated alcohol carboxylate, and its saponified product, for example, ethylene/vinyl acetate copolymer, ethylene/vinyl alcohol copolymer, etc.; copolymer of an α-olefin as a main component with an α,β-unsaturated carboxylate or an α,β-unsaturated carboxylic acid or the like, for example, ethylene/α-β-unsaturated carboxylate copolymer (ethylene/ethyl acrylate copolymer, ethylene/methyl methacrylate copolymer, etc.), ethylene/α,β-unsaturated carboxylic acid copolymer (ethylene/acrylic acid copolymer, ethylene/methacrylic acid copolymer, etc.), etc.; an acid-modified poly-α-olefin resin prepared by modifying an α-olefin (co)polymer such as polyethylene or polypropylene, with an unsaturated carboxylic acid such as acrylic acid, methacrylic acid, maleic acid, maleic anhydride, fumaric acid or itaconic acid; an ionomer resin prepared by processing an ethylene/methacrylic acid copolymer or the like with Na ion or Zn ion; their mixtures; etc.
One or more such poly-α-olefin resins may be used either singly or as combined. The amount of the poly-α-olefin resin to be used is preferably from 0 to 90 % by weight relative to 100 parts by weight of the total of the cyclized product of a conjugated diene polymer and the polyolefin resin, more preferably from 10 to 80 % by weight, even more preferably from 15 to 70 % by weight, still more preferably from 20 to 50 % by weight. Falling within the above-defined range, the oxygen-absorbing resin composition may well keep the balance among the oxygen absorption rate, the oxygen absorption level and the mechanical strength thereof; and when the proportion of the cyclized product of a conjugated diene polymer therein is higher, then the composition may have a higher oxygen absorption rate and a higher oxygen absorption level.

Another indispensable ingredient of the first oxygen-absorbing resin composition of the invention, the resin (B1) having a C-H bond of which the bond dissociation energy is larger than 3.70 eV but at most 4.20 eV is not specifically defined. Preferably, the bond dissociation energy of the resin (B1) is larger than 3.70 eV but at most 4.17 eV.

Specific examples of the resin (B1) having a C-H bond, of which the bond dissociation energy is larger than 3.70 eV but at most 4.20 eV, include a cyclic olefin resin.

Another indispensable ingredient of the second oxygen-absorbing resin composition of the invention, the resin (B2) having a C-H bond capable of forming a carbon radical of which the reaction energy with oxygen is larger than 10.0 kcal/mol but at most 22.0 kcal/mol is not specifically defined. Preferably, the reaction energy with oxygen of the resin (B2) is preferably at most 20.0 kcal/mol.

Specific examples of the resin (B2) having a C-H bond capable of forming a carbon radical of which the reaction energy with oxygen is larger than 10.0 kcal/mol but at most 22.0 kcal/mol include a polystyrene and a cyclic olefin resin.

In the invention, the cyclic olefin resin for use as the resin (B1) or the resin (B2) may be a ring-opened polymer or an addition polymer of a cyclic olefin. It may also be a homopolymer and a copolymer of a cyclic olefin, and a copolymer of a cyclic olefin with any other olefin copolymerizable with it. Further, the cyclic olefin resin may be those prepared through polymer modification by maleic acid addition or cyclopentadiene addition or hydrogenation, after cyclic olefin (co)polymerization.
In the invention, the resin (B1) and the resin (B2) may also be resins obtained from other monomers than cyclic olefins, which have the same structure as cyclic olefin resins as a result of a post-treatment after polymerization such as hydrogenation.

The weight-average molecular weight of the cyclic olefin resin for use in the invention is not particularly limited and may be generally within a range of from 1,000 to 1,000,000, in terms of standard polystyrene measured through gel permeation chromatography (GPC) in a toluene or cyclohexane solvent, preferably from 10,000 to 500,000, more preferably from 20,000 to 100,000. When the weight-average molecular weight is too small, then the physical strength of the oxygen-absorbing resin composition comprising the resin may be poor; but on the contrary, when too large, then the composition may be difficult to shape.

Examples of the cyclic olefin resin are ring-opened (co) polymers of cyclic olefin, addition (co) polymers of cyclic olefin, addition copolymers of cyclic olefin and α-olefin, and their hydrogenated products, as described in JP-A 7-231928.
The cyclic olefin may be a monocyclic olefin or a polycyclic olefin, and may have a condensed ring part with an aromatic ring or the like; and its typical examples are norbornene compound monomers such as bicyclo[2.2.1]hept-2-enes and tetracyclo[6.2.1.1^{3,6}.0^{2,7}]dodec-4-enes.

Specific examples of the norbornene compound monomers are norbornene; norbornene compounds such as alkyl- or alkylidene-substituted norbornene, e.g., 5-methyl-2-norbornene, 5,5-dimethyl-2-norbornene, 5-ethyl-2-norbornene, 5-butyl-2-norbornene and 5-ethylidene-2-norbornene; norbornene compounds substituted with a polar group (halogen atom, cyano group, pyridyl group, methoxy group, etc.); dicyclopentadienes such as dicyclopentadiene and 2,3-dihydrodicyclopentadiene; adducts of cyclopentadiene and tetrahydroindene; trimers and tetramers of cyclopentadiene such as 4,9:5,8-dimethano-3a,4,4a,5,8,8a,9,9a-octahydro-1H-benzoin dene and 4,11:5,10:6,9-trimethano-3a,4,4a,5,5a,6,9,9a,10,10a,11,11a -dodecahydro-1H-cyclopentanthracene; dimethanoctahydronaphthalenes such as 6-methyl-1,4;5,8-dimethano-1,4,4a,5,6,7,8,8a-octahydronaph thalene, 6-ethyl-1,4:5,8-dimethano-1,4,4a,5,6,7,8,8a-octahydronapht halene and 6-ethylidene-1,4:5,8-dimethano-1,4,4a,5,6,7,8,8a-octahydro naphthalene; polar group-substituted dimethanoctahydronaphthalenes such as 6-chloro-1,4;5,8-dimethano-1,4,4a,5,6,7,8,8a-octahydronaph thalene, 6-cyano-1,4:5,8-dimethano-1,4,4a,5,6,7,8,8a-octahydronapht halene, 6-pyridyl-1,4:5,8-dimethano-1,4,4a,5,6,7,8,8a-octahydronap hthalene and 6-methoxycarbonyl-1,4;5,8-dimethano-1,4,4a,5,6,7,8,8a-octa hydronaphthalene; etc.

Examples of the monomer copolymerizable with a norbornene compound monomer include α-olefins such as ethylene and propylene; monocyclic olefins such as cyclopentene; styrenes such as styrene; etc.
Polymerization to give these cyclic olefin resins and their hydrogenation may be attained in an ordinary manner.

Of those cyclic olefin resins, preferred in the invention are ethylene/cyclic olefin copolymers such as ethylene/norbornene copolymers and ethylene/tetracyclododecane copolymers.

In the first oxygen-absorbing resin composition of the invention, the blend ratio of the resin (A1) having a C-H bond of which the bond dissociation energy is at most 3.70 eV, to the resin (B1) having a C-H bond of which the bond dissociation energy is larger than 3.70 eV but at most 4.20 eV is preferably from 3/97 to 50/50 by weight. When the blend ratio of the resin (A1) having a C-H bond of which the bond dissociation energy is at most 3.70 eV, to the resin (B1) having a C-H bond of which the bond dissociation energy is larger than 3.70 eV but at most 4.20 eV falls within the above range, then the oxygen-absorbing resin composition obtained is especially excellent in the oxygen absorption rate and the oxygen absorption level at room temperature, releases very few smells after oxygen absorption, and is further excellent in the mechanical strength.

The reason why the first oxygen-absorbing resin composition of the invention is especially excellent in the oxygen absorption rate and the oxygen absorption level at room temperature and does not release a smell after oxygen absorption may be considered as follows, though it does not limit the scope of the invention:
As one ingredient of the first oxygen-absorbing resin composition of the invention, the resin (A1) having a C-H bond of which the bond dissociation energy is at most 3.70 eV readily generates a radical >C·, when exposed to heat or light. When the oxygen-absorbing resin composition meets oxygen, then the radical >C· immediately reacts with the oxygen to form a radical >COO· with ease. When a radical receptor having a low bond dissociation energy level exists in the oxygen-absorbing resin composition, then a hydrogen may be taken out from the radical receptor to give >COOH, and this may be decomposed to give a radical >CO. and a radical HO·, whereupon the entire system may undergo auto-oxidation and, as a result, oxygen is consumed by the radical thereby resulting in the promotion of oxygen absorption. In this case, when the radical receptor has an alicyclic structure, then the hydrogen removal from it does not result in entire molecule decomposition, and as a result, the amount of the smell to be released may be small. Specifically, in the first oxygen-absorbing resin composition of the invention, the resin (A1) having a C-H bond of which the bond dissociation energy is at most 3.70 eV exists in the matrix of a radical receptor, namely, the resin (B1) having a C-H bond of which the bond dissociation energy is larger than 3.70 eV but at most 4.20 eV; and the resin (A1) initiates an oxygen absorption reaction, then the oxygen absorption reaction triggers off the oxygen absorption reaction by the resin (B1) constituting the matrix, and the oxygen absorption thus goes on. When the matrix resin (B1) has an alicyclic structure, then it is decomposed little even by the oxygen absorption (bond dissociation), and as a result, the smell of a decomposed product may reduce.
In addition, when the ratio of the matrix resin (B1) is high as in the above, then the decomposition by oxygen absorption may be small, and therefore anytime before and after oxygen absorption, the oxygen-absorbing resin composition may have excellent mechanical strength.

In the second oxygen-absorbing resin composition of the invention, the blend ratio of the resin (A2) having a C-H bond capable of forming a carbon radical of which the reaction energy with oxygen is at most 10.0 kcal/mol, to the resin (B2) having a C-H bond capable of forming a carbon radical of which the reaction energy with oxygen is larger than 10.0 kcal/mol but at most 22.0 kcal/mol is preferably from 3/97 to 50/50. When the blend ratio of the resin (A2) having a C-H bond capable of forming a carbon radical of which the reaction energy with oxygen is at most 10.0 kcal/mol, to the resin (B2) having a C-H bond capable of forming a carbon radical of which the reaction energy with oxygen is larger than 10.0 kcal/mol but at most 22.0 kcal/mol is within the above range, then the oxygen-absorbing resin composition obtained is especially excellent in the oxygen absorption rate and the oxygen absorption level at room temperature, releases very few smells after oxygen absorption, and is further excellent in the mechanical strength.

The reason why the second oxygen-absorbing resin composition of the invention is especially excellent in the oxygen absorption rate and the oxygen absorption level at room temperature and does not release a smell after oxygen absorption may be considered as follows, though it does not limit the scope of the invention:
As one ingredient of the second oxygen-absorbing resin composition of the invention, the resin (A2) having a C-H bond capable of forming a carbon radical of which the reaction energy with oxygen is at most 10.0 kcal/mol readily generates a radical >C·, when exposed to heat or light. When the oxygen-absorbing resin composition meets oxygen, then the radical >C· immediately reacts with the oxygen to form a radical >COO· with ease. When a radical receptor having a low bond dissociation energy level exists in the oxygen-absorbing resin composition, then a hydrogen may be taken out from the radical receptor to give >COOH, and this may be decomposed to give a radical >CO. and a radical HO·, whereupon the entire system may undergo auto-oxidation and, as a result, oxygen is consumed by the radical thereby resulting in the promotion of oxygen absorption. In this case, when the radical receptor has an alicyclic structure, then the hydrogen removal from it does not result in entire molecule decomposition, and as a result, the amount of the smell to be released may be small. Specifically, in the second oxygen-absorbing resin composition of the invention, the resin (A2) having a C-H bond capable of forming a carbon radical of which the reaction energy with oxygen is at most 10.0 kcal/mol exists in the matrix of a radical receptor, namely, the resin (B2) having a C-H bond capable of forming a carbon radical of which the reaction energy with oxygen is larger than 10.0 kcal/mol but at most 22.0 kcal/mol; and, the resin (A2) initiates an oxygen absorption reaction, then the oxygen absorption reaction triggers off the oxygen absorption reaction by the resin (B2) constituting the matrix, and the oxygen absorption thus goes on. When the matrix resin (B2) has an alicyclic structure, then it is decomposed little even by the oxygen absorption (bond dissociation), and as a result, the smell of a decomposed product may reduce.
In addition, when the ratio of the matrix resin (B2) is high as in the above, then the decomposition by oxygen absorption may be small, and therefore anytime before and after oxygen absorption, the oxygen-absorbing resin composition may have excellent mechanical strength.

The production method for the first oxygen-absorbing resin composition of the invention is not particularly limited so far as it can uniformly mix the resin (A1) and the resin (B1) ; and for example, herein employable are a solution casting method that comprises dissolving the resin (A1) and the resin (B1) in a solvent, then applying the solution onto a nearly flat face and drying it thereon; a method of melt-kneading (A1) and (B1) in a melt-kneading machine such as an extruder, a kneader and/or a Banbury mixer; etc.

The second oxygen-absorbing resin composition of the invention may also be produced according to the above-mentioned production method, in which, however, the resin (A1) is changed to the resin (A2) and the resin (B1) is changed to the resin (B2).

Unlike conventional oxygen absorbents, the oxygen-absorbing resin composition of the invention does not require a metal compound to be a catalyst for oxygen absorption reaction. The oxygen-absorbing resin composition of the invention may exhibit, without requiring such a catalyst, good oxygen absorbability that its oxygen absorption level per film weight is large and that its oxygen absorption rate per unit time and per film unit area is high.

The oxygen-absorbing film of the invention comprises the oxygen-absorbing resin composition of the invention.
Unless otherwise specifically indicated in the invention, the film has a concept that includes both films and sheets that may be differentiated strictly from each other by their thickness.
The method of forming the oxygen-absorbing resin composition of the invention into film is not particularly limited and may be any conventional known one. For example, according to a solution-casting method that comprises dissolving the oxygen-absorbing resin composition of the invention in a solvent, then applying the solution onto a nearly flat face and drying it thereon, the film may be obtained. In addition, for example, the resin composition may be melt-kneaded in an extruder, then extruded out through a T-die, a circular die (ring die) or the like to give a predetermined shape, thereby obtaining a T-die film and a blown film. As the extruder, usable is a melt-kneading machine such as a single-screw extruder, a double-screw extruder or a Banbury mixer. The T-die film may be biaxially stretched to give a biaxially stretched film.

The oxygen-absorbing multilayer structure of the invention has at least an oxygen-absorbing layer comprising the oxygen-absorbing resin composition of the invention.
In the oxygen-absorbing multilayer structure of the invention, the oxygen-absorbing layer may contain any other oxygen-absorbing component than the oxygen-absorbing resin composition of the invention, so far as the advantages of the invention are not detracted. The amount of the other oxygen-absorbing component than the oxygen-absorbing resin composition of the invention may be less than 50 % by weight of the whole amount of the oxygen-absorbing components (total amount of the oxygen-absorbing resin composition of the invention and the other oxygen-absorbing component than the oxygen-absorbing resin composition of the invention), preferably less than 40 % by weight, more preferably less than 30 % by weight.
The oxygen-absorbing layer of the oxygen-absorbing multilayer structure of the invention, depending on the constitution of the multilayer structure, is to be a layer having the function of absorbing the external oxygen that permeates through a gas-barrier material layer or, when a packing material comprising the oxygen-absorbing multilayer structure having, for example, a constitution of sealing material layer/oxygen-absorbing layer/gas-barrier material layer is formed into a packing container, for example, a bag-shaped one, it is to be a layer having the function of absorbing the oxygen inside the packing material via the sealing material layer.

Preferably, the oxygen-absorbing multilayer structure of the invention has as least a gas-barrier material layer in addition to the oxygen-absorbing layer.
The constitution of the oxygen-absorbing multilayer structure of the invention is not specifically defined, and the structure may be a film or a sheet, or may also be in any other form.

The oxygen-absorbing multilayer structure of the invention may further have a sealing material layer, a supporting substrate layer, a deodorant layer, a surface resin layer or a protective layer.
In the oxygen-absorbing multilayer structure of the invention, the order of laminating these constitutive layers is not specifically defined. In general, it is sealing material layer/oxygen-absorbing layer/gas-barrier material layer/deodorant layer/surface resin layer/protective layer. Of those layers, the necessary layers may be provided, if desired.

The gas-barrier material layer is a layer to be provided for preventing external vapor permeation. The gas-barrier material layer is to be an outer layer when the oxygen-absorbing multilayer structure is formed, for example, into a bag-shaped packing material. The oxygen permeation rate of the gas-barrier material layer is preferably as low as possible, so far as the processability and the cost allow; and irrespective of its thickness, the film of the layer having a thickness of 20 µm must have an oxygen permeation rate of at most 100 cc/m²·day·atm in an environment at 25°C and a relative humidity of 65 % [in the invention, this is expressed as "at most 100 cc/m²·day·atm (20 µm), and when the environmental condition is changed, it is additionally described], more preferably at most 50 cc/m²·day·atm (20 µm).

The material to constitute the gas-barrier material layer is not particularly limited so far as it has low vapor (e.g., oxygen, steam) permeability, for which usable are, for example, metals, inorganic materials, resins, etc.
As the metal, generally used is aluminum having low vapor permeability. The metal may be laminated as foil on a resin film or the like, or a thin metal film may be formed on a resin film or the like through vapor deposition.
As the inorganic material, used is a metal oxide such as silica or alumina. One or more such metal oxides may be used either singly or as combined, and may be deposited on a resin film or the like by vapor deposition.
Though not comparable to metals and inorganic materials in point of their gas-barrier property, resins may have many choices in point of mechanical properties, thermal properties, chemical resistance, optical properties and production methods; and because of such advantages, resins are favorably used as gas-barrier material layers. Not specifically defined, the resins usable for the gas-barrier material layer in the invention may be any one having good gas-barrier properties; and chlorine-free resins are favorable as not generating harmful gas on incineration.
Of those, is preferred for use herein a transparent vapor-deposition film produced by vapor-depositing an inorganic oxide on a resin film.

Specific examples of the resins for use in the gas-barrier material layer include polyvinyl alcohol resins such as polyvinyl alcohol and ethylene/vinyl alcohol copolymer; polyester resins such as polyethylene terephthalate and polybutylene terephthalate; polyamide resins such as nylon 6, nylon 66, nylon 610, nylon 11, nylon 12, MXD nylon (polymetaxylylene adipamide) and their copolymers; polyaramide resins; polycarbonate resins; polystyrene resins; polyacetal resins; fluororesins; polyether-based, adipate ester-based, caprolactone ester-based or polycarbonate ester-based thermoplastic polyurethanes; vinyl halide resins such as polyvinylidene chloride and polyvinyl chloride; polyacrylonitriles; copolymers of α-olefin with vinyl acetate, acrylate or methacrylate, for example, ethylene/vinyl acetate copolymer, ethylene/ethyl acrylate copolymer, ethylene/methyl methacrylate copolymer, ethylene/acrylic acid copolymer and ethylene/methacrylic acid copolymer; acid-modified poly-α-olefin resins prepared by modifying an α-olefin (co)polymer such as polyethylene or polypropylene with an unsaturated carboxylic acid such as acrylic acid, methacrylic acid, maleic acid, maleic anhydride, fumaric acid or itaconic acid; ionomer resins prepared by processing an ethylene/methacrylic acid copolymer or the like with Na ion or Zn ion; their mixtures; etc. An inorganic oxide such as aluminum oxide or silicon oxide may be vapor-deposited on the gas-barrier material layer.

These resins may be suitably selected in accordance with the object of the intended multilayer structure, in consideration of the desired necessary properties thereof, for example, gas-barrier properties, mechanical properties such as strength, toughness and rigidity, as well as heat resistance, printability, transparency, adhesiveness, etc. One or more types of these resins may be used either singly or as combined.

To the resin for use in the gas-barrier material layer, optionally added are a heat-resistant stabilizer; a UV absorbent; an antioxidant; a colorant; a pigment; a neutralizing agent; a plasticizer such as phthalate or glycol ester; a filler; a surfactant; a leveling agent; a light stabilizer; a dehydrating agent such as alkaline earth metal oxide; a deodorant such as activated carbon or zeolite; a tackifier (castor oil derivatives, sorbitan higher fatty acid esters, low-molecular polybutenes); a pot life extender (acetylacetone, methanol, methyl orthoacetate, etc.); a cissing-improving agent; other resins (poly-α-olefins, etc.); etc.
If desired, an anti-blocking agent, an antifogging agent, a weather-resistant stabilizer, a lubricant, an antistatic agent, a reinforcing agent, a flame retardant, a coupling agent, a blowing agent, a mold releasing agent or the like may be added to the layer.
The gas-barrier material layer may be subjected to front surface printing or rear surface printing or the like with a desired printing pattern, for example, letters, figures, symbols, designs, patterns and the like by a usual printing method.

A protective layer may be formed outside the gas-barrier material layer for imparting heat resistance or the like.
The resin for use in the protective layer includes ethylene polymers such as high-density polyethylene; propylene polymers such as propylene homopolymer, propylene/ethylene random copolymer and propylene/ethylene block copolymer; polyamides such as nylon 6 and nylon 66; polyesters such as polyethylene terephthalate; etc. Of those, preferred are polyamides and polyesters.
In case where a polyester film, a polyamide film, an inorganic oxide vapor-deposited film, a vinylidene chloride-coated film or the like is used as the gas-barrier material layer, the gas-barrier material layer of the type additionally functions as a protective layer.

In the oxygen-absorbing multilayer structure of the invention, the optionally-provided sealing material layer is a layer that has the function of melting under heat to adhere to each other (heat seal) to thereby form, inside a packing container, a space that is shielded from the outside of the packing container, and to transmit oxygen so as to be absorbed by the oxygen-absorbing layer while preventing direct contact of the oxygen-absorbing layer with the packed subject inside the packing container.

Specific examples of the heat-sealable resin for use in forming the sealing material layer include α-olefin homopolymers; ethylene/α-olefin copolymers; copolymer of an α-olefin as a main component with vinyl acetate, acrylate, methacrylate or the like; acid-modified poly-α-olefin resins prepared by modifying an α-olefin (co)polymer with an unsaturated carboxylic acid; ionomer resins; their mixtures; etc.

The oxygen permeation rate at 25°C of the sealing material layer is preferably at least 200 cc/m²·atm·day (20 µm) irrespective of the number of the layers, the layer thickness and the constitutive material, more preferably at least 400 cc/m²·atm·day (20 µm).
The permeation rate is expressed by the volume of the vapor that passes through a test piece having a unit area for a period of unit time in a unit partial pressure difference, and can be determined by the method of JIS K7126, "test method for gas permeation rate through plastic films and sheets".

The oxygen-absorbing multilayer structure of the invention may have a deodorant layer containing a deodorizing component.
The deodorizing component for use herein may be a known one. The deodorizing component may be an adsorbent that traps a smelling component by its adsorbing action, or may also be a deodorant having a deodorizing effect that changes a smelling component into a non-smelling component by a chemical reaction or the like. It may have both the adsorbing action and the deodorizing action.

The adsorbent may be an organic adsorbent such as soybean powder, polyester resin or acrylic resin, or an inorganic adsorbent such as natural zeolite, synthetic zeolite, silica gel, activated carbon, impregnated activated carbon, activated clay, activated aluminum oxide, clay, diatomaceous earth, kaolin, talc, bentonite, magnesium oxide, iron oxide, aluminum hydroxide, magnesium hydroxide, iron hydroxide, magnesium silicate, aluminum silicate, synthetic hydrotalcite, silicon dioxide, sepiolite or clay minerals such as mica. From the viewpoint of the heat resistance thereof, preferred is an inorganic adsorbent.

In the invention, the deodorant is preferably a basic compound. This may be because, in the invention, the oxygen-absorbing action of the cyclized product of a conjugated diene polymer, which is the active ingredient of the oxygen-absorbing gas-barrier resin layer, goes on as such a cycle mechanism that the active hydrogen is first taken out from the cyclized product of a conjugated diene polymer to give a radical, then the radical traps an oxygen molecule to be a peroxy radical, and the peroxy radical takes out a hydrogen atom, and as a result, an acidic component such as aldehyde or acid may be thereby generated.

The basic compound includes hydroxides of alkali metal or alkaline earth metal; other hydroxides such as iron hydroxide; carbonates and hydrogen carbonates of alkali metal or alkaline earth metal; ammonia; and organic basic compounds, such as amino group- or imino group-having compounds; amido group- or imido group-having compounds; urea bond-having compounds; etc.

In the oxygen-absorbing multilayer structure of the invention, a surface resin layer may be provided outside the gas-barrier material layer.
The resin for use in forming the surface resin layer is preferably a heat-sealable resin that is capable of melting under heat to fuse with each other and extrudable.
For indication of contents therein, in the case where the oxygen-absorbing multilayer tube is used as various containers, the resin is preferably printable by gravure printing, flexographic printing or the like.

Irrespective of the constitutive material thereof, the thickness of the surface resin layer preferably falls within a range of from 5 to 150 µm, more preferably from 10 to 100 µm. When the thickness of the surface resin layer falls within the above range, the structure may exhibit sufficient oxygen absorbability.

The oxygen-absorbing multilayer structure of the invention may have a supporting substrate layer, if desired.
The material to constitute the supporting substrate layer may be selected from poly-α-olefin resins; polyester resins such as polyethylene terephthalate (PET); polyamide resins such as polyamide 6 and polyamide 6/polyamide 66 copolymer; natural fibers; synthetic fibers; sheets prepared by papermaking them.
The supporting substrate layer may be provided between the oxygen-absorbing layer and the gas-barrier material layer, or may be provided in an order of oxygen-absorbing layer/gas-barrier layer/supporting substrate layer.

An adhesive layer may be formed for adhering the constitutive layers. For the adhesive layer, usable is a film or sheet of a resin capable of melting under heat to fuse with each other. Specific examples of the resin of the type include, for example, α-olefin homopolymers or copolymers; acid-modified poly-α-olefin resins; ionomer resins; their mixtures; etc.

To those optional layers, including the protective layer, the sealing material layer, the deodorant layer, the surface resin layer, the supporting substrate layer and the adhesive layer, in the oxygen-absorbing multilayer structure of the invention, various additives may be added like in the gas-barrier material layer.

The production method for the oxygen-absorbing multilayer structure of the invention is not specifically defined. Single-layered films for the individual layers to constitute the multilayer structure may be prepared and these may be laminated; or the multilayer structure may be directly formed.
The single-layered films may be obtained in the same manner as that for forming the oxygen-absorbing resin composition of the invention into films.
From the single-layered films obtained in the manner as above, a multilayer structure may be produced according to an extrusion coating method, a sandwich-lamination method or a dry lamination method.

For producing the multilayer structure, employable is a known coextrusion molding method; and for example, the extrusion molding is attained in the same manner as above except that the same number of extruders as that of the types of the resins are used and a multilayer multi-lamination die is used.
The coextrusion molding method includes a coextrusion lamination method, a coextrusion film forming method, a coextrusion inflation molding method, etc.
One example is shown. According to a water-cooling or air-cooling inflation method, the resins to constitute a gas-barrier material layer, an oxygen-absorbing layer and a sealing material layer are separately heated and melted in different extruders, then extruded out through a multilayer cylindrical die at an extrusion temperature of, for example, from 190 to 210°C, and immediately quenched for solidification with a liquid coolant such as cooling water, thereby giving a tubular resin laminate.

In producing the multilayer structure, the temperature of the resins for the constitutive layers of the multilayer structure is preferably from 160 to 250°C. When it is lower than 160°C, the layer thickness may be uneven and the multilayer structure may be cut; but when higher than 250°C, the multilayer structure may also be cut. More preferably, the temperature is from 170 to 230°C.
The film take-up speed in producing the multilayer structure may be generally from 2 to 200 m/min, preferably from 50 to 100 m/min. When the take-up speed is lower than 2 m/sec, then the production efficiency may be poor; but when it is higher than 200 m/min, then the multilayer structure could not be sufficiently cooled and may be fused during taking up.

In case where the multilayer structure comprises a stretchable material and its properties could be enhanced by stretching, as is in the case of a polyamide resin, a polyester resin, a polypropylene resin and the like, then the multilayer film obtained through coextrusion may be further uniaxially or biaxially stretched. If desired, it may be further heat-set.
The draw ratio in stretching is not particularly limited and may be generally from 1 to 5 times in both the machine direction (MD) and the transverse direction (TD), preferably from 2.5 to 4.5 times in both MD and TD.
The stretching may be attained in a known method of tenter stretching, inflation stretching, roll stretching or the like. The stretching may be attained in any order of MD stretching or TD stretching; however, it is preferably attained at the same time for MD and TD stretching. A tubular simultaneous biaxial stretching method may be employed.

The oxygen-absorbing multilayer structure of the invention may be used, after shaped into various forms of packing containers.
The packing containers may have various forms, depending on their object and use. For example, they may be liquid packing containers having a shape such as a gable top, a brick type, a cube or a regular tetrahedron; other containers having a tray or cup form; containers having a pouch form; etc.

The method for forming the packing containers is not specifically defined. For example, an oxygen-absorbing multilayer structure is reheated at a temperature not higher than the melting point of the resins constituting it, and then uniaxially or biaxially stretched according to a thermoforming method of, for example, drawing, vacuum forming, pressure forming or press forming, or a roll stretching method, a pantographic stretching method, an inflation stretching method or the like, thereby giving a stretched article.

The packing containers obtained from the oxygen-absorbing multilayer structure of the invention may keep therein various commodities, for example, liquid foodstuffs such as typically liquid beverages, e.g., milks, juices, sake, whiskey, shochu, coffee, tea, jelly beverages or health drinks; seasonings, e.g., seasoning liquids, sauce, soy sauce, dressings, liquid stocks, mayonnaise, miso or grated spices; pasty foodstuffs, e.g., jam, cream, chocolate pastes, yogurt or jellies; processed liquid foodstuffs, e.g., liquid soups, boiled foods, pickles or stews; as well as high water-content foodstuffs such as typically raw noodles and boiled noodles of soba, udon, ramen or the like; uncooked rice such as cleaned rice, moisture-conditioned rice or pre-washed rice, and processed rice products such as cooked rice, boiled rice mixed with fish and vegetables, steamed rice with red beans, or rice porridge; powdery seasonings such as powdery soups or soup stocks; lunch boxes used in convenience stores; and also solid or liquid chemicals such as agricultural chemicals or pesticides; liquid or pasty drugs; cosmetics such as toilet lotions, facial creams, milky lotions, hair liquids or hair dyes; cleaning materials such as shampoos, soaps or detergents; electronic materials, recording media; etc. In the packing containers obtained from the oxygen-absorbing multilayer structure of the invention, oxygen inside the containers may be absorbed by the oxygen-absorbing layer, and therefore the commodities kept therein may be prevented from being oxidized and rotted and may have good quality for a long period of time.

### EXAMPLES

The invention is described more concretely with reference to the following Preparation Examples and Examples. Unless otherwise specifically indicated, part and % in all Examples are by weight.
The properties of the samples were evaluated according to the following methods.

### [Weight-average molecular weight (Mw) of cyclized product of conjugated diene polymer]

This is determined as a molecular weight in terms of polystyrene by gel permeation chromatography.

(Unsaturated bond reduction ratio of cyclized product of conjugated diene polymer]
This is determined by proton NMR analysis with reference to the methods described in the following references (i) and (ii).
(i) M. A. Golub and J. Heller, Can. J. Chem., Vol. 41, 937 (1963).
(ii) Y. Tanaka and H. Sato, J. Polym. Sci.: Poly. Chem. Ed., Vol. 17, 3027 (1979).
   In the conjugated diene monomer unit segment in a conjugated diene polymer, when the overall proton peak area before cyclization is represented by SBT and the peak area of the protons directly bonding to the double bond before cyclization is by SBU, and the overall proton peak area after cyclization is represented by SAT and the peak area of the protons directly bonding to the double bond after cyclization is by SAU, then the peak area ratio (SB) of the protons directly bonding to the double bond before cyclization is:
   SB = SBU/SBT,
   and the peak area ratio (SA) of the protons directly bonding to the double bond after cyclization is:
   SA = SAU/SAT.
   Accordingly, the unsaturated bond reduction ratio is determined according to the following expression: Unsaturated bond reduction ratio (%) = 100 x (SB-SA)/SB.

[Oxygen concentration] and [oxygen absorption rate]
An oxygen-absorbing resin composition film is cut into a size of 100 mm x 100 mm, and put into an aluminum pouch having a size of 300 mm x 400 mm (Sakura Bussan's trade name "Hiretort Alumi ALH-9), then air inside it is completely removed, and 100 cc of air having an oxygen concentration of 20.7 % is sealed up therein, stored at 23°C for 5 days, and then the oxygen concentration inside the pouch is measured with an oxygen densitometer (US Ceramatic's trade name "Food Checker HS-750").
From the thus-measured oxygen concentration and the oxygen concentration, 20.7 % before the start of the test, the oxygen absorption rate (cc/100 cm²·day) (20 µm) [this means the volume (cc) of oxygen permeating through the film having a thickness of 20 µm and a cross section of 100 cm² in one day] is computed. Samples having a larger value measured in the manner are more excellent in the oxygen absorption rate.

### [Oxygen absorption level]

The weight of an oxygen-absorbing resin composition film (0.2 to 0.3 g) is accurately determined, then statically put in an air-circulation oven having a controlled temperature of 60°C, and with the lapse of time, the weight change (increase) is traced. The weight increase in the oxygen-absorbing resin composition film is considered to result from oxygen absorption, and the amount of oxygen absorbed by 1 g of the oxygen-absorbing resin composition film is determined.
Samples having a larger value measured in the manner are more excellent in the oxygen absorption level.

[Smell after oxygen absorption]
An oxygen-absorbing resin composition film is cut into a size of 100 mm x 100 mm, and put into an aluminum pouch having a size of 300 mm x 400 mm (Sakura Bussan's trade name "Hiretort Alumi ALH-9), then air inside it is completely removed, and 100 cc of air is sealed up therein, stored at 25°C for 15 days, and then the pouch is opened. According to the following criteria, 5 panelists smell and evaluate it, and their points are averaged. Samples giving fewer smells have a smaller average point.
Point 0: No smell.
Point 1: Only slight smells.
Point 2: Some but a few smells.
Point 4: Some smells.
Point 5: Strong smells.

### (Reference Example 1)

300 parts of polyisoprene (cis-1,4 unit, 73%; trans-1,4 unit, 22 %; 3,4-unit, 5 %; weight-average molecular weight, 154, 000) cut into 10 mm square pieces were put into a pressure reactor equipped with a stirrer, a thermometer, a reflux condenser and a nitrogen gas inlet tube, along with 700 parts of cyclohexane thereinto. The reactor was purged with nitrogen, then heated at 75°C, and with stirring, polyisoprene was completely dissolved in cyclohexane, and thereafter 2.19 parts of p-toluenesulfonic acid (this was dehydrated by reflux in toluene to have a water content of at most 150 ppm) was put into it to attain cyclization at a temperature not higher than 80°C. After thus reacted for 7 hours, aqueous 25 % sodium carbonate solution containing 0.84 parts of sodium carbonate was put into it to stop the reaction. Then at 80°C, water was removed by azeotropic refluxing dehydration, and thereafter the catalyst residue was removed from the system through a glass fiber filter having a pore diameter of 2 µm, thereby giving a solution of a cyclized product (A) of the conjugated diene polymer. The weight-average molecular weight of the thus-obtained cyclized product (A) of the conjugated diene polymer was 141, 000, and the unsaturated bond reduction ratio thereof was 48.9 %.

### (Example 11)

To the solution of 300 parts of the cyclized product (A) of the conjugated diene polymer obtained in the above Reference Example 1, added were an antioxidant, thiodiethylene-bis[3-(3,5-di-t-butyl-4-hydroxyphenyl) propionate] (Ciba Specialty Chemicals' trade name "Irganox 1010") in an amount of 100 ppm and a phosphorus-containing antioxidant, 2,2'-methylenebis(4,6-di-t-butylphenyl)octyl phosphite (Asahi Denka Kogyo's trade name "Adekastab HP-10") in an amount of 200 ppm, the amount of each antioxidant being relative to the cyclized product (A) of the conjugate diene polymer, and 700 parts of a cyclic olefin resin, ethylene/norbornene copolymer (norbornene/ethylene composition ratio = 65/35) (B1-1) (Polyplastic's trade name "TOPAS 8007X"), and then a part of cyclohexane was evaporated away from the solution. Further, toluene was removed from it by vacuum drying to give a solid blend of a cyclized product (A) of conjugated diene polymer/ethylene-norbornene copolymer (B1-1). The blend was ground, and formed into round pellets through a short-screw kneading extruder (die, φ3 mm × 1 hole), thereby giving pellets p11 of an oxygen-absorbing resin composition of the invention.
The ethylene/norbornene copolymer (B1-1) has a structure shown by the formula (3), in which the dissociation energy of the C-H bond shown by the arrow is 4.13 eV.

### (Example 12)

Round pellets p12 of an oxygen-absorbing resin composition of the invention were prepared in the same manner as in Example 1, for which, however, a hydrogenated product of 3,4-polyisoprene (hydrogenated product with cis-1, structure isoprene unit, 25 %; trans-1,4-structure isoprene unit, 11 %; 3,4-structure isoprene unit, 63 %; weight-average molecular weight, 252,000) (B1-2) was used in place of the ethylene/norbornene copolymer (B1-1).
The hydrogenated product of 3, 4-polyisoprene (B1-2) has a structure shown by the following formula (8), in which the dissociation energy of the C-H bond shown by the arrow is 4.17 eV.

[Formula 8]

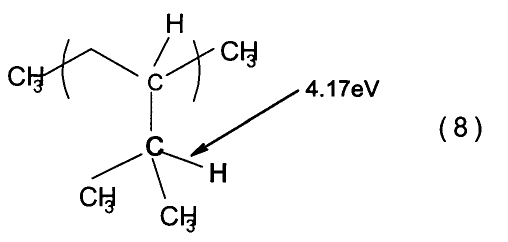

### (Comparative Example 11)

A solid blend of a cyclized product (A) of conjugated diene polymer/hydrogenated product of 1,4-polyisoprene polymer (C-1) was prepared in the same manner as in Example 1, for which, however, a hydrogenated product of a 1,4-polyisoprene polymer (hydrogenated product with cis-1,4 structure isoprene unit, 86 %; trans-1,4-structure isoprene unit, 12 %; 3,4-structure isoprene unit, 2 %; weight-average molecular weight, 136,000) (C-1) was used in place of the ethylene/norbornene compound copolymer (B1-1). The blend was ground, and formed into round pellets through a short-screw kneading extruder (die, φ3 mm × 1 hole), thereby giving pellets pc11 of an oxygen-absorbing resin composition.
The hydrogenated product of 1,4-polyisoprene (C-1) has a structure shown by the formula (2), in which the dissociation energy of the C-H bond shown by the arrow is 4.24 eV.

### (Comparative Example 12)

Round pellets pc12 of an oxygen-absorbing resin composition were prepared in the same manner as in Example 1, for which, however, low-density polyethylene (MFR = 4.0, Idemitsu Petrochemical's trade name "Moretec 0438") (C-2) was used in place of the ethylene/norbornene compound copolymer (B1-1).
The low-density polyethylene (C-2) has a structure shown by the following formula (9), in which the dissociation energy of the C-H bond shown by the arrow is 4.30 eV. In the formula (9), R means a long-chain alkyl group.
The compositions and others of the pellets p11, p12, pc11 and pc12 are summarized and shown in Table 1.

[Formula 9]

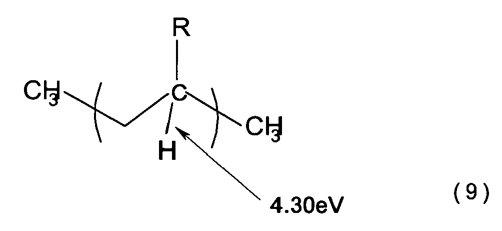

**[Table 1]**

| | | Example 11 | Example 12 | Comparative Example 11 | Comparative Example 12 |
|---|---|---|---|---|---|
| Resin A1 (pt.) | | | | | |
| A | Cyclized product of conjugated diene polymer | 30 | 30 | 30 | 30 |
| Bond | dissociation energy (eV) | 3.70 | 3.70 | 3.70 | 3.70 |

| Resin B1 (pt.) | | | | | |
|---|---|---|---|---|---|
| | B1-1 Ethylene/norbornene copolymer | 70 | | | |
| B1-2 | Hydrogenated product of 3,4-polyisoprene | | 70 | | |
| Bond dissociation energy (eV) | | 4.13 | 4.17 | | |

| Resin C (pt.) | | | | | |
|---|---|---|---|---|---|
| C-1 | Hydrogenated product of 1,4-polyisoprene | | | 70 | |
| | C-2 Low-density polyethylene 70 | | | | 70 |
| Bond dissociation energy (eV) | | | | 4.24 | 4.30 |
| Round pellets | | p11 | p12 | pc11 | pc12 |

### (Examples 13 and 14, Comparative Examples 13 and 14)

### (Evaluation of oxygen concentration, oxygen absorption rate, and smell after oxygen absorption)

A T-die and a biaxial stretch tester (both by Toyo Seiki Seisakusho) were connected to a laboratory plastomill single-screw extruder; and the pellets p11, p12, pc11 and pc12 prepared in Examples 11 and 12 and Comparative Examples 11 and 12 were separately extruded and shaped into films f11, f12, fc11 and fc12, respectively, each having a width of 100 mm and a thickness of 20 µm. These films were cut into a size of 100 mm x 100 mm to prepare test pieces. These were tested for the oxygen absorption level, the oxygen absorption rate and the smell after oxygen absorption. The results are shown in Table 2.

**[Table 2]**

| | Example 13 | Example 14 | Comparative Example 13 | Comparative Example 14 |
|---|---|---|---|---|
| Film | f11 | f12 | fc11 | fc12 |
| Oxygen absorption level (cc/g) | 108 | 106 | 45 | 42 |
| Oxygen absorption rate (cc/100 cm²·day) (20 µm) | 1.63 | 0.76 | 0.10 | 0.00 |
| Smell after oxygen absorption | 1.4 | 2.1 | 2.5 | 2.3 |

Table 2 shows that, in Examples 11 and 12, where the resin (A1) having a C-H bond of which the bond dissociation energy is at most 3.70 eV (the cyclized product of a conjugated diene polymer) and the resin (B1) having a C-H bond of which the bond dissociation energy is larger than 3.70 eV but at most 4.20 eV (the ethylene/norbornene copolymer (B1-1 in Example 11) or the hydrogenated product of 3,4-polyisoprene (B1-2 in Example 12) are used, the oxygen absorption level and the oxygen absorption rate at room temperature are high, and in particular, in the case where the ethylene/norbornene copolymer (= B1-1) is used, the degree of smells after oxygen absorption is low (Example 13).

As opposed to these, it is shown that, in the cases where the resin (C-1 or C-2) of which the bond dissociation energy is larger than 4.20 eV (Comparative Examples 11 and 12) is used in place of the resin (B1) having a C-H bond of which the bond dissociation energy is larger than 3.70 eV but at most 4.20 eV, oxygen absorption does not goes on at all or goes on little, and in addition, smells are given after oxygen absorption.
This may be because, in the Examples of the invention, the resin (B1) having a C-H bond of which the bond dissociation energy is larger than 3. 70 eV but at most 4.20 eV may efficiently receive the radical generated by the cyclized product of a conjugated diene polymer, therefore enhancing the oxygen absorbability at room temperature; and especially in Example 11, the resin (B1) has an alicyclic structure, and therefore it does not decompose easily even after dissociation of the C-H bond, and as a result, smells would be hardly generated.

### (Example 21)

To the solution of 300 parts of the cyclized product (A) of the conjugated diene polymer obtained in the above Reference Example 1, added were an antioxidant, thiodiethylene-bis[3-(3,5-di-t-butyl-4-hydroxyphenyl) propionate] (Ciba Specialty Chemicals' trade name "Irganox 1010") in an amount of 100 ppm [relative to the cyclized product (A) of the conjugate diene polymer,] and a phosphorus-containing antioxidant, 2,2'-methylenebis(4,6-di-butylphenyl)octyl phosphite (Asahi Denka Kogyo's trade name "Adekastab HP-10") in an amount of 200 ppm , the amount of each antioxidant being relative to the cyclized product (A) of the conjugate diene polymer, and 700 parts of polystyrene (Toyo Styrene's trade name "Toyostyrol GP G200C") (B2-1), and then a part of cyclohexane was evaporated away from the solution. Further, toluene was removed from it by vacuum drying to give a solid blend of the cyclized product (A) of the conjugated diene polymer/polystyrene (B2-1). The blend was ground, and formed into round pellets through a short-screw kneading extruder (die, φ3 mm x 1 hole), thereby giving pellets p21 of an oxygen-absorbing resin composition of the invention.
The polystyrene (B2-1) has a structure shown by the formula (6), in which the reaction energy with oxygen of the carbon radical formed from the C-H bond, shown by the arrow, is 13.9 kcal/mol.

### (Example 22)

Round pellets p22 of an oxygen-absorbing resin composition of the invention were prepared in the same manner as in Example 1, for which, however, a hydrogenated product of a ring-opened polymer of 6-ehtylidene-1,4:5,8-dimethano-1,4,4a,5,6,7,8,8a-octahydro naphthalene (weight-average molecular weight, 40,000) (B2-2) was used in place of the polystyrene (B2-1).
The hydrogenated product of a ring-opened polymer of 6-ethylidene-1,4:5,8-dimethano-1,4,4a,5,6,7,8,8a-octahydro naphthalene has a structure shown by the following formula (10), in which the reaction energy with oxygen of the carbon radical formed from the C-H bond, shown by the arrow, is 21. 8 kcal/mol.

[Formula 10]

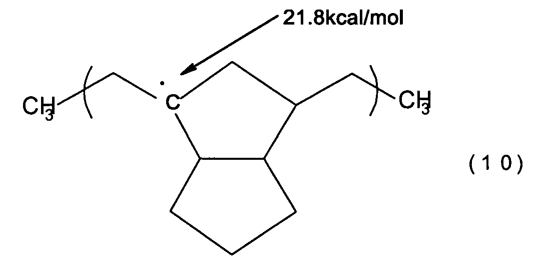

### (Comparative Example 21)

A solid blend of a cyclized product (A) of a conjugated diene polymer/polypropylene (C-3) was prepared in the same manner as in Example 1, for which, however, polypropylene (MFR, 7.0; Nippon Polypro's trade name "Wintec WFX4T") (C-3) was used in place of the polystyrene (B2-1). The blend was ground, and formed into round pellets through a short-screw kneading extruder (die, φ3 mm x 1 hole), thereby giving pellets pc21 of an oxygen-absorbing resin composition.
The polypropylene (C-3) has a structure shown by the formula (5), in which the reaction energy with oxygen of the carbon radical formed from the C-H bond, shown by the arrow, is 28.4 kcal/mol.

### (Comparative Example 22)

Round pellets pc22 of an oxygen-absorbing resin composition were prepared in the same manner as in Example 21, for which, however, low-density polyethylene (MFR = 4.0, Idemitsu Petrochemical's trade name "Moretec 0438") (C-4) was used.
The low-density polyethylene (C-4) has a structure shown by the following formula (11), in which the reaction energy with oxygen of the carbon radical formed from the C-H bond, shown by the arrow, is 24.5 kcal/mol. In the formula (11), R means a long-chain alkyl group.
The compositions and others of the pellets p21, p22, pc21 and pc22 are summarized and shown in Table 3.

[Formula 11]

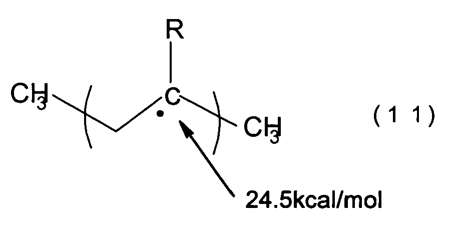

**[Table 3]**

| | | Example 21 | Example 22 | Comparative Example 21 | Comparative Example 22 |
|---|---|---|---|---|---|
| Resin A2 (pt.) | | | | | |
| A | Cyclized product of conjugated diene polymer | 30 | 30 | 30 | 30 |
| Reaction energy with oxygen(*1) | | 10.0 | 10.0 | 10.0 | 10.0 |
| Resin B (pt.) | | | | | |
| B2-1 | Polystyrene | 70 | | | |
| B2-2 | Hydrogenated product of ring-opened polymer of norbornene compound (*2) | | 70 | | |
| Reaction energy with oxygen (*1) | | 13.9 | 21.8 | | |
| Resin C (pt.) | | | | | |
| C-3 | Hydrogenated product of 1,4-polyisoprene | | | 70 | |
| C-4 | Low-density polyethylene | | | | 70 |
| Reaction energy with oxygen(*1) | | | | 28.4 | 24.5 |
| Round pellets | | p21 | p22 | pc21 | pc22 |

| | | | | | |
|---|---|---|---|---|---|
| *1: Reaction energy with oxygen of the carbon radical formed through dissociation of C-H bond. *2: 6-Ethylidene-1,4:5,8-dimethano-1,4,4a,5,6,7,8,8a-octahydronaphthalene. | | | | | |

### (Examples 23 and 24, Comparative Examples 23 and 24)

### (Evaluation of oxygen concentration and smell after oxygen absorption)

A T-die and a biaxial stretch tester (both by Toyo Seiki Seisakusho) were connected to a laboratory plastomill single-screw extruder; and the pellets a to d prepared in Examples 21 and 22 and Comparative Examples 21 and 22 were separately extruded and shaped into films f21, f22, fc21 and fc22, respectively, each having a width of 100 mm and a thickness of 20 µm. These films were cut into a size of 100 mm x 100 mm to prepare test pieces. These were tested for the oxygen concentration and the smell after oxygen absorption. The results are shown in Table 4.

**[Table 4]**

| | Example 23 | Example 24 | Comparative Example 23 | Comparative Example 24 |
|---|---|---|---|---|
| Film | f21 | f22 | fc21 | fc22 |
| Oxygen absorption rate (cc/100 cm²·day) (20 µm) | 1.46 | 0.76 | 0.00 | 0.00 |
| Oxygen absorption level (cc/g) | 105 | 106 | 45 | 42 |
| Smell after oxygen absorption | 1.4 | 1.5 | 2.5 | 2.3 |

Table 4 shows that, in Examples 21 and 22, where the resin (A2) having a C-H bond capable of forming a carbon radical of which the reaction energy with oxygen is at most 10.0 kcal/mol (the cyclized product of a conjugated diene polymer) and the resin (B2) having a C-H bond capable of forming a carbon radical of which the reaction energy with oxygen is larger than 10.0 kcal/mol but at most 22.0 kcal/mol (polystyrene (B2-1), or the hydrogenated product of the ring-opened polymer of 6-ethylidene-1,4:5,8-dimethano-1,4,4a,5,6,7,8,8a-octahydro naphthalene (B2-2)) are used, the oxygen absorption level is high, and the degree of smells after oxygen absorption is low.

As opposed to these, it is shown that, in the cases where the resin (C-3 or C-4) having a C-H bond capable of forming a carbon radical of which the reaction energy with oxygen is more than 22.0 kcal/mol (Comparative Examples 21 and 22) in place of the resin (B2) having a C-H bond capable of forming a carbon radical of which the reaction energy with oxygen is larger than 10.0 kcal/mol but at most 22.0 kcal/mol is used, oxygen absorption does not goes on at all or goes on little, and in addition, smells are given after oxygen absorption.

This may be because, in the Examples of the invention, the resin (B2) having a C-H bond capable of forming a carbon radical of which the reaction energy with oxygen is larger than 10. 0 kcal/mol but at most 22. 0 kcal/mol may efficiently receive the radical generated by the resin (A) having a C-H bond capable of forming a carbon radical of which the reaction energy with oxygen is at most 10.0 kcal/mol (the cyclized product of conjugated diene polymer), therefore enhancing the oxygen absorbability at room temperature. It is shown that, in the case where the resin (B2) has an alicyclic structure, the resin (B2) does not decompose easily even after a reaction with radical, and as a result, smells may be hardly generated. Though the reason is not clear, in the case where the resin (B2) is polystyrene, the degree of smells is also small since the main chain of the resin (B2) may be difficult to cut.

## Claims

1. An oxygen-absorbing resin composition that comprises a resin (A1) having a C-H bond of which the bond dissociation energy is at most 3.70 eV, and a resin (B1) having a C-H bond of which the bond dissociation energy is larger than 3.70 eV but at most 4.20 eV.

2. The oxygen-absorbing resin composition as claimed in claim 1, wherein the ratio of the resin (A1) having a C-H bond of which the bond dissociation energy is at most 3.70 eV, to the resin (B1) having a C-H bond of which the bond dissociation energy is larger than 3.70 eV but at most 4.20 eV is from 3/97 to 50/50 by weight.

3. The oxygen-absorbing resin composition as claimed in any one of claim 1 and claim 2, wherein the number of the C-H bond of which the bond dissociation energy is at most 3.70 eV, in the resin (A1) having a C-H bond of which the bond dissociation energy is at most 3.70 eV is at least one, per one repetitive unit that constitutes the resin (A1).

4. The oxygen-absorbing resin composition as claimed in any one of claim 1 to claim 3, wherein the resin (A1) having a C-H bond of which the bond dissociation energy is at most 3.70 eV is a cyclized product of a conjugated diene polymer.

5. The oxygen-absorbing resin composition as claimed in any one of claim 1 to claim 4, wherein the resin (B1) having a C-H bond of which the bond dissociation energy is larger than 3.70 eV but at most 4.20 eV is a cyclic olefin resin.

6. The oxygen-absorbing resin composition as claimed in claim 5, wherein the cyclic olefin resin is an ethylene/cyclic olefin copolymer.

7. An oxygen-absorbing resin composition that comprises a resin (A2) having a C-H bond capable of forming a carbon radical of which the reaction energy with oxygen is at most 10.0 kcal/mol, and a resin (B2) having a C-H bond capable of forming a carbon radical of which the reaction energy with oxygen is larger than 10.0 kcal/mol but at most 22.0 kcal/mol.

8. The oxygen-absorbing resin composition as claimed in claim 7, wherein the ratio of the resin (A2) having a C-H bond capable of forming a carbon radical of which the reaction energy with oxygen is at most 10.0 kcal/mol, to the resin (B2) having a C-H bond capable of forming a carbon radical of which the reaction energy with oxygen is larger than 10.0 kcal/mol but at most 22.0 kcal/mol is from 3/97 to 50/50 by weight.

9. The oxygen-absorbing resin composition as claimed in any one of claim 7 and claim 8, wherein the number of the C-H bond capable of forming a carbon radical of which the reaction energy with oxygen is at most 10.0 kcal/mol, in the resin (A2) having a C-H bond capable of forming a carbon radical of which the reaction energy with oxygen is at most 10.0 kcal/mol is at least one, per one repetitive unit that constitutes the resin (A2).

10. The oxygen-absorbing resin composition as claimed in any one of claim 7 to claim 9, wherein the resin (A2) having a C-H bond capable of forming a carbon radical of which the reaction energy with oxygen is at most 10.0 kcal/mol is a cyclized product of a conjugated diene polymer.

11. The oxygen-absorbing resin composition as claimed in any one of claim 7 to claim 10, wherein the resin (B2) having a C-H bond capable of forming a carbon radical of which the reaction energy with oxygen is larger than 10.0 kcal/mol but at most 22.0 kcal/mol is a polystyrene or a cyclic olefin resin.

12. The oxygen-absorbing resin composition as claimed in any one of claim 4 to claim 10, wherein the cyclized product of a conjugated diene polymer has an unsaturated bond reduction ratio of 60 % or less.

13. The oxygen-absorbing resin composition as claimed in claim 12, wherein the cyclized product of a conjugated diene polymer is a cyclized product of a polyisoprene rubber or a cyclized product of a styrene/isoprene block copolymer.

14. An oxygen-absorbing film comprising the oxygen-absorbing resin composition of any one of claim 1 to claim 13.

15. An oxygen-absorbing multilayer structure including an oxygen-absorbing layer comprising the oxygen-absorbing resin composition of any one of claim 1 to claim 13.

16. The oxygen-absorbing multilayer structure as claimed in claim 15, which further comprises at least a gas-barrier material layer.
